# FASCICULE DE BREVET EUROPEEN

(11) **EP 2 814 705 B1**
(45) Date de publication et mention de la délivrance du brevet: **20.04.2016**
(21) Numéro de dépôt: 13706638.7
(22) Date de dépôt: 05.02.2013
(51) Int. Cl.: B60T 7/22

(54) **PROCÉDÉ DE FREINAGE AUTOMATIQUE POUR VÉHICULE AUTOMOBILE**
AUTOMATISCHES BREMSVERFAHREN FÜR FAHRZEUGE
AUTOMATIC BRAKING METHOD FOR MOTOR VEHICLE

(30) Priorité: 16.02.2012 FR 1251429
(43) Date de publication de la demande: 24.12.2014
(73) Titulaire: Peugeot Citroën Automobiles SA, 78140 Vélizy Villacoublay (FR)
(72) Inventeur: GERONIMI, Stephane, F-92380 Garches (FR); GURRET, Fabien, F-92160 Antony (FR)
(86) Numéro de dépôt international: PCT/FR2013/050243
(87) Numéro de publication internationale: WO 2013/121129

(56) Documents cités:
- EP-A1- 1 749 687
- WO-A1-03/104056
- WO-A1-2006/042512
- DE-A1-102005 034 277

## Description

### Domaine de l'invention

La présente invention se rapporte au domaine des systèmes de freinage automatique pour véhicule, et en particulier pour véhicule automobile.

### Arrière-plan de l'invention

Ces dernière années, de nombreux systèmes de freinage automatique ont été développés à destination des véhicules automobiles dans le but d'éviter les collisions avec les obstacles environnants ou tout du moins de limiter les conséquences d'une telle collision.

La demande JP 2001-309247 décrit ainsi un tel système de freinage automatique qui comporte de manière classique un capteur monté sur le véhicule considéré pour identifier un objet susceptible de rentrer en collision avec ce véhicule. Le système comporte également un module de commande qui évalue la menace que représente cet objet en fonction de sa distance et de sa vitesse relative par rapport au véhicule considéré. Selon l'intensité de cette menace, ce module de commande envoie un signal à un dispositif de décélération qui va actionner le freinage automatique du véhicule.

On connaît également de la demande WO 03006291, un système de freinage automatique de ce type qui range, en fonction des grandeurs de mesure reçues par le ou les capteurs de mesure, les objets identifiés selon des catégories prédéfinies telles que personne, motocyclette, petite voiture, grosse voiture, camion, bus, glissière de sécurité ou encore bâtiments ; chacune de ces catégories étant associée à un modèle dynamique de déplacement à partir duquel une multitude de trajectoires de déplacement probables sont déterminées à l'aide des grandeurs mesurées par le capteur pour chaque objet identifié.

Sur la base de ces trajectoires de déplacement, le système détermine un risque de collision qui indique la probabilité que le véhicule entre en collision avec cet objet, ainsi qu'un potentiel de danger qui évalue la mise en danger des occupant qu'entraînerait la collision possible.

Au-delà d'un risque de collision et/ou d'un potentiel de danger supérieur à une valeur seuil prédéterminée, le système active ou non le dispositif de décélération.

La demande EP 1 749 687 A1 décrit un procédé pour déclencher et exécuter un freinage automatique d'un véhicule selon le préambule de la revendication 1.

### Objet et résumé de l'invention

La présente invention vise à améliorer l'efficacité d'un tel système de freinage automatique.

Elle propose à cet effet, un procédé pour déclencher et exécuter un freinage automatique d'un véhicule afin d'éviter une collision ou de réduire la force d'impact avec un obstacle, ledit procédé comportant les étapes suivantes :
- détection d'un obstacle se trouvant dans une zone de détection par l'intermédiaire d'un module de détection comportant au moins un capteur de mesure ;
- vérification de la réalisation de l'ensemble des conditions de déclenchement d'un dit freinage automatique ;
- transmission d'un ordre d'appliquer une force de freinage déterminée à un module de décélération que comporte ledit véhicule ;
- application de ladite force de freinage audit véhicule par ledit module de décélération ;
   ledit procédé étant caractérisé en ce qu'il comporte précédemment à ladite étape de vérification une étape de sélection du type de freinage automatique à considérer, ladite étape de sélection consistant :
   - lorsque la vitesse instantanée dudit véhicule est inférieure ou égale à une première valeur seuil, à opter pour un freinage automatique d'évitement au cours duquel une force de freinage variable est appliquée audit véhicule, ou
   - lorsque la vitesse instantanée dudit véhicule est supérieure à ladite première valeur seuil, à opter pour un freinage automatique de réduction de vitesse d'impact au cours duquel une force de freinage prédéfinie inférieure ou égale à ladite force de freinage variable est appliquée audit véhicule.

La présence d'une telle étape de sélection du type de freinage automatique à considérer en fonction de la vitesse instantanée du véhicule permet d'améliorer l'efficacité et la sûreté de fonctionnement du freinage automatique.

En effet, plus la vitesse du véhicule est élevée, plus il est nécessaire, si l'on souhaite impérativement éviter la collision avec l'obstacle identifié, de débuter précocement le freinage automatique (alors même que l'obstacle est encore loin) tout en exerçant une force de freinage élevée. Cet état de fait est de nature à perturber le conducteur du véhicule considéré, entraînant des réactions inappropriées et potentiellement nuisibles à la sécurité et/ou à l'efficacité de ce freinage.

Par ailleurs, l'augmentation de la vitesse du véhicule (et donc par corrélation de la distance d'intervention) accroit, du fait de la diminution sensible des performances du capteur de mesure au-delà d'une certaine distance, la probabilité d'une appréciation erronée de la situation pouvant entraîner dans certains cas l'application non à propos d'un freinage automatique d'évitement.

C'est pourquoi, au-delà d'une valeur seuil prédéfinie, le procédé considère que la vitesse du véhicule est trop élevée pour qu'un tel freinage d'évitement puisse être mis en oeuvre dans de bonnes conditions. Il opte alors pour un freinage automatique de réduction de vitesse d'impact dont l'objectif n'est plus d'éviter la collision mais seulement de réduire cette vitesse d'impact afin de limiter les conséquences pour les personnes et les véhicules concernés.

Le procédé selon l'invention établit donc un compromis optimum entre d'une part, la réalisation de l'objectif premier d'évitement, et d'autre part, le respect des objectifs d'efficacité et de sécurité.

Selon des caractéristiques préférées du procédé, prises seules ou en combinaison :
- ladite première valeur seuil (BV) est comprise entre 20 et 40 km/h, et de préférence égale à 30 km/h ;
- ledit procédé comporte une étape d'association, en fonction des informations reçues par ledit module de détection (10), dudit obstacle à une catégorie parmi une pluralité de catégories d'obstacles prédéfinies (400) ;

- les conditions de déclenchement d'un dit freinage automatique de réduction de vitesse d'impact varient en fonction de ladite catégorie à laquelle ledit obstacle est associé ;
- lesdites catégories prédéfinies comprennent une première catégorie d'obstacles pour laquelle aucun dit freinage automatique de réduction de vitesse d'impact n'est déclenché si la vitesse instantanée (Vc) dudit véhicule est supérieure à une deuxième valeur seuil (HV1) supérieure à ladite première valeur seuil (BV) ;
- ladite première catégorie d'obstacles correspond aux piétons, et en ce que ladite deuxième valeur seuil (HV1) est comprise entre 50 et 70 km/h, et de préférence égale à 60 km/h ;
- lesdites catégories prédéfinies comprennent une deuxième catégorie d'obstacles pour laquelle aucun dit freinage automatique de réduction de vitesse d'impact n'est appliqué si la vitesse instantanée (Vc) dudit véhicule est supérieure à une troisième valeur seuil (HV2) supérieure à ladite deuxième valeur seuil (HV1) ;
- ladite deuxième catégorie d'obstacles correspond aux véhicules fixes, et en ce que ladite troisième valeur seuil (HV2) est comprise entre 70 et 90 km/h, et de préférence égale à 80 km/h ;
- lesdites catégories prédéfinies comprennent une troisième catégorie d'obstacles pour laquelle l'application d'un dit freinage automatique de réduction de vitesse d'impact est indépendante de la vitesse instantanée (Vc) dudit véhicule ;
- ladite deuxième catégorie d'obstacles correspond aux véhicules roulants ;
- ledit module de détection (10) comporte un capteur radar (11), par exemple de type à balayage à effet doppler, émettant de façon périodique un signal vers l'avant dudit véhicule et sur une section angulaire prédéterminée ;
- ledit module de détection (10) comporte un capteur lidar ;
- ledit module de détection (10) comporte un capteur vidéo (12) couplé à un module électronique de reconnaissance d'objet permettant de répertorier les obstacles se trouvant à l'avant dudit véhicule selon les trois catégories suivantes : véhicules roulants, véhicules fixes et piétons ; et/ou
- ledit module de détection (10) comporte un dispositif de réception sans fil de type GSM apte à recevoir directement des informations de positionnement, d'orientation, de vitesse ou de catégorie émises directement par ledit obstacle via par exemple une balise GSM ou un téléphone portable.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente un schéma fonctionnel d'un système de freinage automatique apte à mettre en oeuvre le procédé selon l'invention ; et
- la figure 2 représente un organigramme du procédé de freinage automatique selon l'invention.

### Description détaillée d'un mode de réalisation

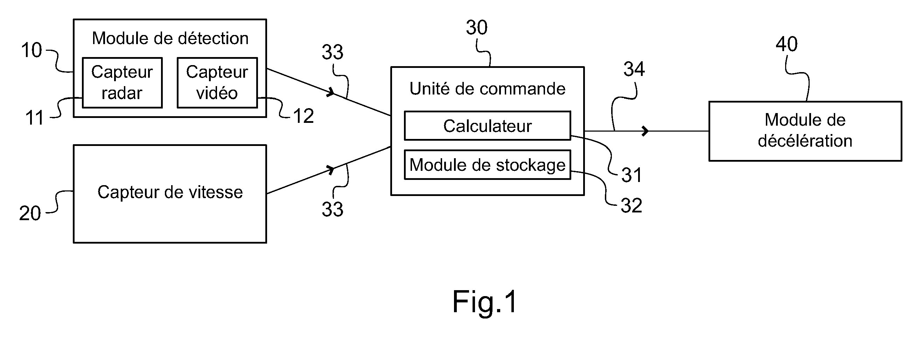

Le système de freinage automatique 1 illustré sur la figure 1 comporte un module de détection 10, un capteur de vitesse 20 permettant de déterminer la vitesse instantanée Vc du véhicule considéré, une unité de commande 30 et un module de décélération 40.

Le module de détection 10 comporte au moins un capteur apte à identifier les obstacles se trouvant dans une zone de détection.

Selon un mode de réalisation préféré, le module de détection 10 comporte un capteur radar 11 ainsi qu'un capteur vidéo 12.

Le capteur radar 11, qui est de préférence de type à balayage à effet doppler, émet de façon périodique (avec par exemple une fréquence 24 GHz) un signal vers l'avant du véhicule et sur une section angulaire prédéterminée.

En variante, ce capteur radar peut être d'un type différent et/ou fonctionner à une autre fréquence, par exemple 77 GHz.

Une portion de ce signal émis se réfléchit sur l'ensemble des objets se trouvant sur son chemin, puis revient en direction du radar.

Le décalage entre la fréquence d'émission du signal et la fréquence de réception permet de déterminer avec précision la distance d'intervalle D entre le véhicule considéré et l'objet tandis que l'évolution de ce décalage permet d'en déduire la vitesse instantanée de l'obstacle.

Le capteur vidéo 12 comporte une caméra située à l'avant du véhicule qui est couplée à un module électronique de reconnaissance d'objet. Ce dernier permet ainsi d'identifier les obstacles se trouvant à l'avant du véhicule considéré et de les répertorier selon les trois catégories suivantes : véhicules roulants, véhicules fixes et piétons.

Les signaux d'informations en provenance du module de détection 10 et du capteur de vitesse 20 sont acheminés vers l'unité de commande 30. Celle-ci comporte un calculateur 31, un module de stockage 32 qui comprend de la mémoire non volatile de type EEPROM ou FLASH et de la mémoire vive, ainsi que des interfaces d'entrée 33 et de sortie 34.

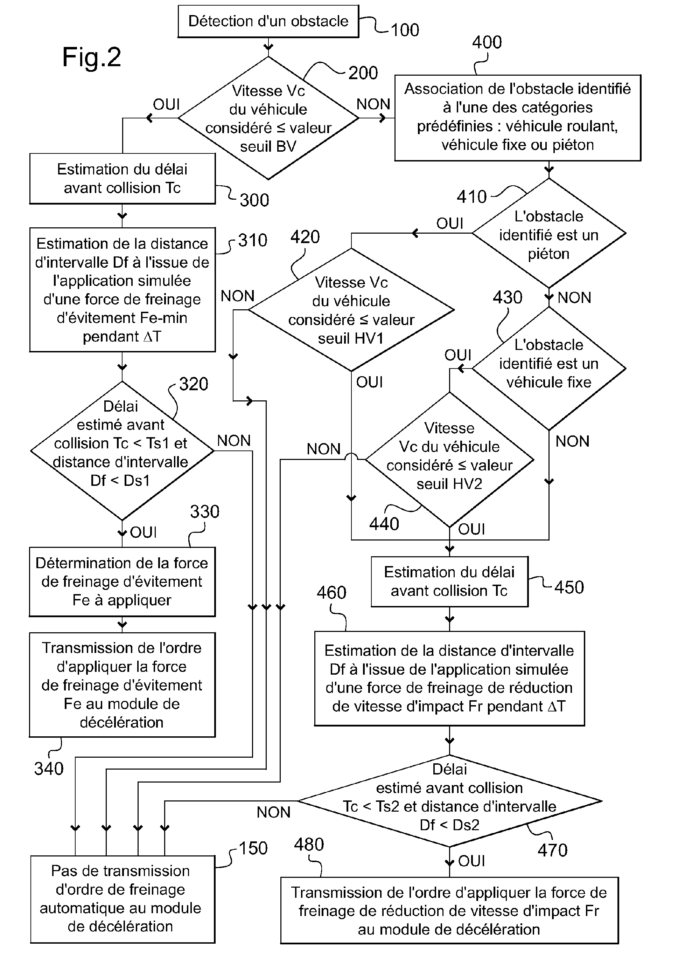

La mémoire non volatile stocke un processus de commande d'un freinage automatique qui est mis en oeuvre dans cette unité 30 et dont l'organigramme est représenté sur la figure 2.

Selon un mode préféré de réalisation, l'ensemble des informations contenues dans cette mémoire non volatile peut être mis à jour par des moyens de communication ou des moyens de lecture d'un support de données.

Dans l'unité de commande 30, le processus de commande de freinage automatique est mis en oeuvre selon une période prédéterminée comprise entre 10 et 60 ms, et de préférence égale à 40 ms.

A chaque itération, le processus détermine, en fonction des signaux d'information reçus en provenance du capteur de vitesse 20 et du module de détection 10, si un freinage automatique d'évitement ou de réduction de vitesse d'impact est nécessaire.

Dans l'affirmative, cette unité de commande 30 envoie un signal au module de décélération 40 afin que ce dernier applique une force de freinage adaptée sur les roues du véhicule considéré.

On va maintenant décrire en détails et à l'appui de l'organigramme de la figure 2, les différentes étapes de ce processus.

A l'étape 100, celui-ci détecte en fonction des signaux reçus par le module de détection 10 si un obstacle se trouve dans la zone de détection des capteurs radar 11 et vidéo 12.

Lorsqu'un tel obstacle est identifié, le processus se poursuit par l'étape 200 dans laquelle le calculateur 31 détermine si la vitesse instantanée Vc du véhicule considéré est inférieure ou égale à une valeur seuil prédéfinie BV comprise entre 20 et 40 km/h et de préférence égale à 30km/h.

Si cette condition est remplie, alors le processus va estimer que le véhicule considéré est dans une configuration basse vitesse dans laquelle un freinage d'évitement pourrait être mis en oeuvre de manière sécurisé, même dans l'hypothèse où le conducteur de ce véhicule et/ou d'autres usagers situés dans son environnement proche réagiraient de façon inappropriée à ce freinage automatique. Le processus se ramifie alors vers la branche gauche de l'organigramme représenté sur la figure 2 au cours de laquelle il va vérifier si la situation d'espèce remplit simultanément les deux conditions de déclenchement d'un tel freinage d'évitement.

La première condition porte sur le délai avant collision Tc estimé par le calculateur 31 à l'étape 300 et, égal au rapport entre la vitesse relative instantanée Vr du véhicule considéré vis-à-vis de l'obstacle et la distance d'intervalle D les séparant.

On rappelle que cette distance D est transmise en permanence au calculateur 31 par le module de détection 10. Pour obtenir la valeur instantanée de la vitesse relative Vr, le calculateur 31 soustrait la vitesse instantanée de l'obstacle Vo transmise par le module de détection 10 à la vitesse instantanée du véhicule considéré Vc transmise par le capteur de vitesse 20.

Pour que la première condition soit remplie, le délai Tc estimé doit être inférieur à une valeur seuil Ts1 prédéfinie et par exemple égale à 3 ou 4 secondes.

La seconde condition porte sur l'évolution estimée de la distance d'intervalle D pendant une durée prédéterminée ΔT (comprise par exemple entre 1 et 1,5 s) en prenant comme hypothèse qu'une force de freinage minimale d'évitement prédéfinie Fe-min est appliquée sur ce véhicule (égale par exemple à 6 m/s²) pendant cette durée.

Le calculateur 31 détermine à l'étape 310, la valeur Df de cette distance d'intervalle à l'issu de la durée ΔT en supposant que l'obstacle maintient sa dynamique de déplacement (trajectoire et vitesse) pendant cette durée ΔT.

Pour que la seconde condition soit remplie, cette distance Df doit être inférieure à une valeur seuil D_{S1} prédéfinie, comprise par exemple entre 0,4 et 0,8 m.

Le processus vérifie ensuite à l'étape 320 que les deux conditions exposées précédemment sont bien remplies simultanément.

Dans la négative, le processus décide de ne transmettre aucun ordre de freinage automatique au module de décélération 40 (étape 150).

Dans l'affirmative, le processus passe à l'étape 330 dans laquelle il va déterminer la force de freinage d'évitement Fe à appliquer au véhicule concerné.

Pour ce faire, le calculateur 31 reproduit la simulation en augmentant à chaque itération la force de freinage d'une valeur prédéfinie (par exemple 0.5 m/s²) et ce tant que la valeur de la distance Df estimée est inférieure à la valeur seuil Ds et que la force de freinage appliquée est inférieure à une valeur maximum Fe-max (par exemple égale à 10 m/s²).

Le processus transmet alors au module de décélération 40 l'ordre d'appliquer la force de freinage d'évitement Fe qui vient d'être déterminée par le calculateur 31, et ce pendant la durée ΔT (étape 340).

Nous allons maintenant revenir à l'étape 200 dans laquelle le calculateur détermine si la vitesse instantanée Vc du véhicule considéré est inférieure ou égale à une valeur seuil prédéfinie BV.

Si cette condition n'est pas remplie, alors le processus va estimer que le véhicule considéré est dans une configuration haute vitesse dans laquelle un freinage d'évitement ne peut être mis en oeuvre de manière totalement sécurisée. Ce type de freinage peut nécessiter en effet de fortes décélérations qui doivent être réalisées à bon escient et avec une quasi-certitude. D'autre part, à haute vitesse, un tel freinage d'évitement nécessite de débuter la décélération beaucoup plus tôt ce qui peut perturber le conducteur du véhicule considéré et entraîner des réactions inappropriées de sa part nuisibles à la sécurité et à l'efficacité de ce freinage.

Le processus se ramifie donc vers la branche droite de l'organigramme représenté sur la figure 2. L'objectif du freinage automatique n'est alors plus d'éviter la collision mais de réduire la vitesse d'impact afin de limiter les conséquences pour les personnes et les véhicules concernés.

Au niveau de l'étape 400, en fonction des informations reçues en provenance du module de détection 10, le processus associe l'obstacle identifié à l'une des catégories d'obstacles prédéfinies et stockées dans la mémoire non volatile : véhicule roulant, véhicule fixe ou piéton.

Si cet obstacle est identifié comme un piéton (étape 410), le processus se poursuit par l'étape 420 dans laquelle le calculateur 31 détermine si la vitesse instantanée Vc du véhicule considéré est inférieure ou égale à une valeur seuil prédéfinie HV1 supérieure à la valeur BV, comprise entre 50 et 70 km/h, et de préférence égale à 60 km/h. Si cette condition n'est pas remplie, le processus estime que la vitesse instantanée du véhicule considéré est trop élevée pour qu'un freinage automatique de réduction de vitesse soit appliqué à cette catégorie d'obstacle. A l'inverse, si cette condition est respectée, le processus se poursuit par les étapes 450 et suivantes au cours desquelles il va vérifier si la situation d'espèce remplit simultanément les autres conditions de déclenchement d'un tel freinage.

Si cet obstacle n'est pas identifié comme un piéton à l'étape 410, le processus vérifie à l'étape 430 s'il s'agit d'un véhicule fixe. Dans l'affirmative, le calculateur 31 détermine à l'étape 440 si la vitesse instantanée Vc du véhicule considéré est inférieure ou égale à une valeur seuil prédéfinie HV2 supérieure à la valeur HV1, comprise entre 70 et 90 km/h, et de préférence égale à 80 km/h. Si cette condition n'est pas remplie, le processus estime que la vitesse instantanée du véhicule considéré est trop élevée pour qu'un freinage automatique de réduction de vitesse soit appliqué à cette catégorie d'obstacle. A l'inverse, si cette condition est respectée, le processus se poursuit par les étapes 450 et suivantes.

Si cet obstacle n'est pas identifié comme un véhicule fixe à l'étape 430, autrement dit s'il s'agit d'un véhicule mobile, le processus se poursuit par les étapes 450 et suivantes.

Au cours de l'étape 450 qui est similaire à l'étape 300 évoquée précédemment, le calculateur 31 va estimer le délai avant collision Tc.

Pour que la première condition soit remplie, le délai Tc estimé doit être inférieur à une valeur seuil Ts2 prédéfinie et par exemple égale à 3 ou 4 secondes.

La seconde condition porte sur l'évolution estimée de la distance d'intervalle D pendant une durée prédéterminée ΔT (comprise par exemple entre 1 et 1,5 s) en prenant comme hypothèse qu'une force de freinage de réduction de vitesse d'impact prédéfinie Fr est appliquée sur ce véhicule pendant cette durée. Cette force de freinage Fr est inférieure ou égale à la force de freinage minimale d'évitement Fe-min évoquée précédemment, et comprise par exemple entre 5 et 6 m/s².

Le calculateur 31 détermine à l'étape 460, la valeur Df de cette distance d'intervalle à l'issu de la durée ΔT en supposant que l'obstacle maintient sa dynamique de déplacement (trajectoire et vitesse) pendant la durée ΔT.

Pour que la seconde condition soit remplie, cette distance Df doit être inférieure à une valeur seuil Ds2 prédéfinie, comprise par exemple entre 0,4 et 0,8 m.

Le processus vérifie ensuite à l'étape 470 que les deux conditions précédentes sont bien remplies simultanément.

Dans la négative, le processus décide de ne transmettre aucun ordre de freinage automatique au module de décélération 40 (étape 150).

Dans l'affirmative, le processus transmet alors au module de décélération 40 l'ordre d'appliquer la force de freinage de réduction de vitesse d'impact Fr qui vient d'être déterminée par le calculateur 31, et ce pendant la durée ΔT (étape 480).

Selon des variantes non représentées, le module de détection 10 peut comporter d'autres dispositifs en sus ou en remplacement des capteurs radar 11 et vidéo 12, tel que par exemple un capteur lidar ou bien un dispositif de réception sans fil de type GSM apte à recevoir directement des informations de positionnement, d'orientation, de vitesse ou de catégorie émises directement par l'obstacle via une balise GSM (véhicule) ou un téléphone portable (piéton).

Bien entendu, la présente invention ne se limite pas aux formes de réalisation décrites et représentées, mais elle englobe toute variante d'exécution.

## Revendications

1. Procédé pour déclencher et exécuter un freinage automatique d'un véhicule afin d'éviter une collision ou de réduire la force d'impact avec un obstacle, ledit procédé comportant les étapes suivantes :
- détection d'un obstacle se trouvant dans une zone de détection par l'intermédiaire d'un module de détection (10) comportant au moins un capteur de mesure (11, 12) (100) ;
- vérification de la réalisation de l'ensemble des conditions de déclenchement d'un dit freinage automatique (320, 410, 420, 430, 440, 470) ;
- transmission d'un ordre d'appliquer une force de freinage déterminée (Fe, Fr) à un module de décélération (40) que comporte ledit véhicule (340, 480) ;
- application de ladite force de freinage (Fe, Fr) audit véhicule par ledit module de décélération (40) ;
ledit procédé étant **caractérisé en ce qu'**il comporte précédemment à ladite étape de vérification (320, 410, 420, 430, 440, 470) une étape de sélection du type de freinage automatique à considérer (200), ladite étape de sélection consistant :
- lorsque la vitesse instantanée (Vc) dudit véhicule est inférieure ou égale à une première valeur seuil (BV), à opter pour un freinage automatique d'évitement au cours duquel une force de freinage variable (Fe) est appliquée audit véhicule, ou
- lorsque la vitesse instantanée (Vc) dudit véhicule est supérieure à ladite première valeur seuil (BV), à opter pour un freinage automatique de réduction de vitesse d'impact au cours duquel une force de freinage prédéfinie (Fr) inférieure ou égale à ladite force de freinage variable (Fe) est appliquée audit véhicule.

2. Procédé selon la revendication 1, **caractérisé en ce que** ladite première valeur seuil (BV) est comprise entre 20 et 40 km/h, et de préférence égale à 30 km/h.

3. Procédé selon l'une des revendications 1 ou 2, **caractérisé en ce qu'**il comporte une étape d'association, en fonction des informations reçues par ledit module de détection (10), dudit obstacle à une catégorie parmi une pluralité de catégories d'obstacles prédéfinies (400).

4. Procédé selon la revendication 3, **caractérisé en ce que** les conditions de déclenchement d'un dit freinage automatique de réduction de vitesse d'impact varient en fonction de ladite catégorie à laquelle ledit obstacle est associé.

5. Procédé selon la revendication 3, **caractérisé en ce que** lesdites catégories prédéfinies comprennent une première catégorie d'obstacles pour laquelle aucun dit freinage automatique de réduction de vitesse d'impact n'est déclenché si la vitesse instantanée (Vc) dudit véhicule est supérieure à une deuxième valeur seuil (HV1) supérieure à ladite première valeur seuil (BV).

6. Procédé selon la revendication 4, **caractérisé en ce que** ladite première catégorie d'obstacles correspond aux piétons, et **en ce que** ladite deuxième valeur seuil (HV1) est comprise entre 50 et 70 km/h, et de préférence égale à 60 km/h.

7. Procédé selon l'une des revendications 5 ou 6, **caractérisé en ce que** lesdites catégories prédéfinies comprennent une deuxième catégorie d'obstacles pour laquelle aucun dit freinage automatique de réduction de vitesse d'impact n'est appliqué si la vitesse instantanée (Vc) dudit véhicule est supérieure à une troisième valeur seuil (HV2) supérieure à ladite deuxième valeur seuil (HV1).

8. Procédé selon la revendication 7, **caractérisé en ce que** ladite deuxième catégorie d'obstacles correspond aux véhicules fixes, et **en ce que** ladite troisième valeur seuil (HV2) est comprise entre 70 et 90 km/h, et de préférence égale à 80 km/h.

9. Procédé selon l'une des revendications 7 ou 8, **caractérisé en ce que** lesdites catégories prédéfinies comprennent une troisième catégorie d'obstacles pour laquelle l'application d'un dit freinage automatique de réduction de vitesse d'impact est indépendante de la vitesse instantanée (Vc) dudit véhicule.

10. Procédé selon la revendication 9, **caractérisé en ce que** ladite deuxième catégorie d'obstacles correspond aux véhicules roulants.

11. Procédé selon l'une des revendications 1 à 10, **caractérisé en ce que** ledit module de détection (10) comporte un capteur radar (11), par exemple de type à balayage à effet doppler, émettant de façon périodique un signal vers l'avant dudit véhicule et sur une section angulaire prédéterminée.

12. Procédé selon l'une des revendications 1 à 10, **caractérisé en ce que** ledit module de détection (10) comporte un capteur lidar.

13. Procédé selon l'une des revendications 1 à 12, **caractérisé en ce que** ledit module de détection (10) comporte un capteur vidéo (12) couplé à un module électronique de reconnaissance d'objet permettant de répertorier les obstacles se trouvant à l'avant dudit véhicule selon les trois catégories suivantes : véhicules roulants, véhicules fixes et piétons.

14. Procédé selon l'une des revendications 1 à 13, **caractérisé en ce que** ledit module de détection (10) comporte un dispositif de réception sans fil de type GSM apte à recevoir directement des informations de positionnement, d'orientation, de vitesse ou de catégorie émises directement par ledit obstacle via par exemple une balise GSM ou un téléphone portable.

## Patentansprüche

1. Verfahren zum Auslösen einer automatischen Bremsung eines Fahrzeugs zur Vermeidung einer Kollision oder zur Verringerung der Aufprallkraft gegen ein Hindernis, wobei das Verfahren die folgenden Phasen umfasst:
- Erfassung eines Hindernisses innerhalb eines Erfassungsbereichs mittels eines Erfassungsmoduls (10), das mindestens einen Messwertgeber (11, 12) (100) umfasst;
- Überprüfung der Durchführung aller Auslösungsbedingungen einer solchen automatischen Bremsung (320, 410,420,430,440,470);
- Übertragung eines Befehls zur Anwendung einer bestimmten Bremskraft (Fe, Fr) zu einem Verzögerungsmodul (40), das das Fahrzeug (340, 480) umfasst;
- Anwendung der Bremskraft (Fe, Fr) auf das Fahrzeug durch das Verzögerungsmodul (40);
wobei das Verfahren **dadurch gekennzeichnet ist, dass** es vor der Überprüfungsphase (320, 410, 420, 430, 440, 470) über eine Auswahlphase der Art der in Betracht zu ziehenden automatischen Bremsung (200) verfügt, wobei die Auswahlphase besteht aus:
- wenn die momentane Geschwindigkeit (Vc) des Fahrzeugs kleiner oder gleich einem ersten Schwellenwert (BV) ist, Auswahl einer vermeidenden automatischen Bremsung, bei der eine variable Bremskraft (Fe) auf das Fahrzeug angewendet wird, oder
- wenn die momentane Geschwindigkeit (Vc) des Fahrzeugs größer als der erste Schwellenwert (BV) ist, Auswahl einer automatischen Bremsung zur Verringerung der Aufprallgeschwindigkeit, bei der eine vordefinierte Bremskraft (Fr) auf das Fahrzeug angewendet wird, die kleiner oder gleich der variablen Bremskraft (Fe) ist.

2. Verfahren nach Anspruch 1, **dadurch gekennzeichnet, dass** der erste Schwellenwert (BV) zwischen 20 und 40 km/h liegt, und vorzugsweise gleich 30 km/h ist.

3. Verfahren nach einem der Ansprüche 1 oder 2, **dadurch gekennzeichnet, dass** es in Abhängigkeit der erhaltenen Informationen vom Erfassungsmodul (10) eine Verknüpfungsphase des Hindernisses mit einer Kategorie aus einer Vielzahl von vordefinierten Hinderniskategorien (400) umfasst.

4. Verfahren nach Anspruch 3, **dadurch gekennzeichnet, dass** die Auslösungsbedingungen einer automatischen Bremsung zur Verringerung der Aufprallgeschwindigkeit gemäß der Kategorie variieren, mit der das Hindernis verknüpft wird.

5. Verfahren nach Anspruch 3, **dadurch gekennzeichnet, dass** die vordefinierten Kategorien eine erste Hinderniskategorie umfassen, für die keine automatische Bremsung zur Verringerung der Aufprallgeschwindigkeit ausgelöst wird, wenn die momentane Geschwindigkeit (Vc) des Fahrzeugs größer als ein zweiter Schwellenwert (HV1) ist, der höher als der erste Schwellenwert (BV) ist.

6. Verfahren nach Anspruch 4, **dadurch gekennzeichnet, dass** die erste Hinderniskategorie Fußgängern entspricht, und dass der zweite Schwellenwert (HV1) zwischen 50 und 70 km/h liegt, und vorzugsweise gleich 60 km/h ist.

7. Verfahren nach einem der Ansprüche 5 oder 6, **dadurch gekennzeichnet, dass** die vordefinierten Kategorien eine zweite Hinderniskategorie umfassen, für die keine automatische Bremsung zur Verringerung der Aufprallgeschwindigkeit angewendet wird, wenn die momentane Geschwindigkeit (Vc) des Fahrzeugs größer als ein dritter Schwellenwert (HV2) ist, der höher als der zweite Schwellenwert (HV1) ist.

8. Verfahren nach Anspruch 7, **dadurch gekennzeichnet, dass** die zweite Hinderniskategorie stehenden Fahrzeugen entspricht, und dass der dritte Schwellenwert (HV2) zwischen 70 und 90 km/h liegt, und vorzugsweise gleich 80 km/h ist.

9. Verfahren nach einem der Ansprüche 7 oder 8, **dadurch gekennzeichnet, dass** die vordefinierten Kategorien eine dritte Hinderniskategorie umfassen, für die die Anwendung einer automatischen Bremsung zur Verringerung der Aufprallgeschwindigkeit unabhängig von der momentanen Geschwindigkeit (Vc) des Fahrzeugs ist.

10. Verfahren nach Anspruch 9, **dadurch gekennzeichnet, dass** die zweite Hinderniskategorie fahrenden Fahrzeugen entspricht.

11. Verfahren nach einem der Ansprüche 1 bis 10, **dadurch gekennzeichnet, dass** das Erfassungsmodul (10) einen Radarsensor (11) umfasst, beispielsweise Typ Abtastung mit Doppler-Effekt, der in regelmäßigen Abständen ein Signal zur Vorderseite des Fahrzeugs in einem vordefinierten Winkelbereich aussendet.

12. Verfahren nach einem der Ansprüche 1 bis 10, **dadurch gekennzeichnet, dass** das Erfassungsmodul (10) einen Lidar-Sensor umfasst.

13. Verfahren nach einem der Ansprüche 1 bis 12, **dadurch gekennzeichnet, dass** das Erfassungsmodul (10) einen Videosensor (12) umfasst, der mit einem elektronischen Modul zur Gegenstanderkennung verbunden ist, das die Unterscheidung der Hindernisse vor dem Fahrzeug in die drei folgenden Kategorien ermöglicht: fahrende Fahrzeuge, stehende Fahrzeuge und Fußgänger.

14. Verfahren nach einem der Ansprüche 1 bis 13, **dadurch gekennzeichnet, dass** das Erfassungsmodul (10) eine drahtlose Empfangsvorrichtung Typ GSM umfasst, mit dem die Informationen über Position, Ausrichtung Geschwindigkeit oder Kategorie, die direkt vom Hindernis ausgesendet werden, z. B. über einen GSM-Leitpfosten oder ein Mobiltelefon zu empfangen.

## Claims

1. Process to initiate and perform automatic braking of a vehicle in order to avoid a collision or to reduce the force of the impact with an obstacle, the aforementioned process includes the following stages:
- detection of an obstacle found within the detection zone via the intermediary of a detection module (10) including at least a measurement sensor (11, 12) (100);
- verification for implementing all the conditions for starting automatic braking (320, 410, 420, 430, 440, 470);
- transmission of an order to apply a determined braking force (Fe, Fr) to a deceleration module (40) which is fitted to the said vehicle (340, 480);
- application of the said braking force (Fe, Fr) to the said vehicle by the said deceleration module (40);
the said process being **characterised in that** it involves the previous verification stage (320, 410, 420, 430, 440, and 470) a stage for selecting the type of automatic braking to be considered (200), this selection stage consisting of:
- when the instantaneous speed (Vc) of the said vehicle is less than or equal to a first threshold value (BV), to opt for automatic avoidance braking during which a variable braking force is applied (Fe) to the said vehicle, or
- when the instantaneous speed (Vc) of the said vehicle is greater than the aforementioned threshold value (BV) to opt for automatic braking to reduce the speed of impact during which a predefined (Fr) braking force, less than or equal to the aforesaid variable braking force (Fe) is applied to the said vehicle.

2. Process according to claim 1, characterised so that the first threshold value (BV) is comprised between 20 and 40 km/h, and for preference is equal to 30 km/h.

3. Process according to claims 1 or 2, characterised so that it involves an association stage, depending on the information received by the aforesaid detection module (10), of the aforesaid obstacle to one category amongst a plurality of predefined categories of obstacles (400).

4. Process according to claim 3, characterised so that the conditions for starting such an automatic impact speed reduction braking varies depending on the aforesaid category to which the aforesaid obstacle is associated.

5. Process according to claim 3 **characterised in that** the aforesaid predefined categories include a first category of obstacles for which no automatic braking to reduce impact speed is started if the instantaneous speed (Vc) of the aforementioned vehicle is greater than a second threshold value (HV1), which itself is greater than the first threshold value (BV).

6. Process according to claim 4, characterised so that the aforementioned first category of obstacles corresponds to pedestrians and the second threshold value (HV1) lies between 50 and 70 km/h, and for preference equals 60 km/h.

7. Process according to one of the claims 5 or 6 characterised as one of the aforesaid predefined categories including a second category of obstacles for which no automatic braking for impact speed reduction is applied if the instantaneous speed (Vc) of the vehicle is greater than a third threshold value (HV2), itself greater than the second threshold value (HV1).

8. Process according to claim 7, characterised so that the aforementioned second category of obstacles corresponds to stationary vehicles and the third threshold value (HV2) lies between 70 and 90 km/h, and for preference equals 80 km/h.

9. Process according to one of the claims 7 or 8 characterised as one of the aforesaid predefined categories including a third category of obstacles for which the application of automatic impact speed reduction braking is independent of the instantaneous speed (Vc) of the aforesaid vehicle.

10. Process according to claim 9, characterised so that the aforesaid second category of obstacles corresponds to moving vehicles.

11. Process according to one of the claims 1 to 10, characterised so that the detection module (10) includes a radar sensor (11) for example a Doppler Effect radar, emitting in a periodic manner a signal in front of the aforesaid vehicle and in a predetermined angular section.

12. Process according to one of the claims 1 to 10, characterised so that the detection module (10) includes a lidar sensor.

13. Process according to one of the claims 1 to 12, characterised so that the detection module (10) includes a video sensor (12) coupled to an electronic object recognition module allowing the obstacles found in front of the aforesaid vehicle to be assessed into the three following categories: Moving vehicle, stationary vehicle and pedestrians.

14. Process according to one of the claims 1 to 13, characterised so that the detection module (10) includes a GSM type Wi-Fi receiver able to directly receive the information concerning position, direction, speed or a category emitted directly by the said obstacle via (for example) a GSM beacon or mobile telephone.
